# EUROPEAN PATENT SPECIFICATION

(11) **EP 0 411 093 B1**
(45) Date of publication and mention of the grant of the patent: **03.05.1995**
(21) Application number: 90903312.8
(22) Date of filing: 13.02.1990
(51) Int. Cl.: A63C 5/11

(54) **ICE AND SNOW SURF-BOARD**
EIS- UND SCHNEE-SURFSCHLITTEN
PLANCHE A VOILE SUR GLACE ET SUR NEIGE

(30) Priority: 21.02.1989 CA 591601
(43) Date of publication of application: 06.02.1991
(73) Proprietor: CSEPREGI, Karoly, Willowdale, Ontario M2N 3M3 (CA)
(72) Inventor: CSEPREGI, Karoly, Willowdale, Ontario M2N 3M3 (CA)
(74) Representative: Needle, Jacqueline
(86) International application number: CA9000043
(87) International publication number: WO9009818

(56) References cited:
- DE-A- 2 801 859
- DE-A- 3 014 665
- DE-A- 3 309 502
- DE-A- 3 705 568
- FR-A- 2 547 509

## Description

The present invention relates to a sailboard for sailing on snow or ice using a conventional articulated hand held sail.

It is known in the prior art to construct ice boats and a variety of other devices to sail on ice and snow. It is also well known to manufacture devices for sailing on water which comprise a sailboard and a hand held sail mounted on the sailboard by means of an articulated mast. (The term "sailboard" is sometimes used in the prior art to mean only the hull of such a sailing craft and sometimes to indicate to whole craft including the sail. In this specification it is used to refer to the hull portion only.) The sail of such craft is usually equipped with a wishbone boom or functionally similar structure to enable a sailor to pull (or to push) the sail against the wind from either side of the sail. The articulated mast permits the sailor freely to rotate or pivot the sail as he wishes to control and direct the craft in the wind. Such sailboats are hereafter referred to as "free sail" sailboats.

Attempts have been made in the prior art to construct free sail sailboats for sailing on snow or ice. Such devices are shown for example, in Canadian Patents Nos. 1,148,587 and 1,204,467, and in US Patents Nos. 3,794,341, 3,352,567, 3,436,087, 3,143,357 and 4094262. However these devices provide a platform upon which a sailor rides and either ski runners for snow or skate blades for ice are provided on struts to permit sliding over the terrain. Having a platform separated from the runners by struts provides an inherently weak structure. It is particularly important to have a stable and strong structure should the runners strike a hole or crack in the ice or other irregularities in the terrain surface. A depending blade or a ski might get caught, bend or break to cause the sailboard to upset. Since a sailing craft on ice or snow can achieve high speeds, such as 60-70 miles per hour, there could be serious consequences if there was a sudden loss of control and failure of the supporting structure in a high speed condition.

DE-A-3705568 shows a sailboard for sailing on snow or ice by way of an articulated hand held sail having runners depending from the underside thereof. However, whilst this known sailboard does not have the same safety problems as the previous devices, it is lacking in manoeuvrability.

DE-A-3309502 describes a sailboard for sailing on snow or ice by way of a conventional articulated hand held sail means mounted thereon, the sailboard having a top side and an underside, a bow portion, a platform portion and a stern portion, and wherein at least the underside of the bow portion extends forwardly and upwardly such that the sailboard is enabled to ride over surface irregularities, and at least the underside of the stern portion extends rearwardly and upwardly such that pressure over the stern portion is able to unweight the bow and platform portions, and wherein the underside has two spaced longitudinal runners located laterally inwardly of the most laterally outward part of the top side, extending to the bow portion of the sailboard, and shaped to glide longitudinally but with low resistance to lateral slippage.

The sailboard shown in DE-A-3309502 is also lacking in manoeuvrability, and in particular cannot be tipped over on its side and yet remain on the runner(s).

It is an object of the present invention to provide a sailboard with improved manoeuvrability as compared to the prior art sailboards.

According to the present invention, a sailboard as defined above is characterised in that a part of each said runner towards the rear of said platform portion is shaped to resist lateral slippage, in that each said runner extends downwardly from the underside of the sailboard by an amount sufficient to enable the sailboard to be rolled over laterally onto one of the runners when manoeuvring, in that a projecting rear blade extends along a part of each said runner near the rear of the platform portion, and in that the underside has a single channel extending along a central longitudinal axis substantially along the full longitudinal extent thereof, said channel being defined by the inner surfaces of said two longitudinal extending runners and by said underside.

A sailboard of an embodiment of the invention is preferably constructed in a single piece to present a sailing device with no outstanding parts. The sailboard has a low design profile to be as close to the ground as possible. In use, a large underside "surfing area" acts like a snowshoe in deep soft snow and will support a sailor on the surface of the snow and not get stuck. The sailboard is very manoeuvrable allowing the operator to turn sideways whilst rolling the sailboard over at an angle such as 45° while gliding or sailing on one runner only. In this position there is a lot more gripping against lateral slippage and greater potential for high speed. The board is preferably built like a surfboard and has some water floating capabilities so that in emergency situations it can go over weak ice or even open water.

Further, an embodiment of the present invention provides a structure which permits good steering control during operation over a wide range of speeds without requiring steering controls on the sailboard. Steering is obtained by weight shifts and sail manipulation by a sailor operating the sailing craft in a manner similar to that conventionally used for sailing sailboards on water. Thus, skills acquired from one sport may be readily transferred to the other because of the nature of the construction of the present invention. Accordingly, the construction has the advantage of facilitating access to an existing parallel market.

In an embodiment, which is particularly suited to icy conditions, a front glide pad having low resistance to longituidnal or lateral slippage is located on each runner at the front of the platform portion.

The length of the rear blade is determined by the physical characteristics of the sailboard and the type of performance to be achieved.

The principle governing the construction of the runners is related to steering during gliding. There should be a sufficient length of the runner that resists lateral slippage towards the rear of the platform under the sailor to stabilize the craft for longitudinal sailing while moving across the wind on a tack. However, the length of the portion resisting lateral slippage will not be so long that it wil prevent the front of the sailboard from being turned by the sailor. The appropriate length of the lateral resistance portion of a runner or blade means will vary for different levels of performance or for different physical characteristics of an embodiment of this invention. The appropriate length may be determined empirically or otherwise by those skilled in the art from existing technology and this disclosure.

The runners on the underside are within the width of the top side of the sailboard. The underside is shaped laterally outward from the runners to permit the sailboard to be tilted or rolled over on its side to glide on one runner while unweighting or lifting another runner clear of the surface of the terrain. The underside may for example extend vertically upward then laterally outward from the runners to meet the edge of the top side. The displacement upward and outward from the runners to this top side edge will be of a sufficient distance to permit a sailor standing on the sailboard to roll or tilt the sailboard over on its side by shifting his or her weight, preferably while remaining in the footstraps on the board. This rolling action facilitates the steering at high speeds. The extent to which the top side projects laterally outward and upward over the runners will be determined by factors of stability, performance and the physical characteristics of the sailboard. This determination will be within the skill of persons skilled in the art.

The raised stern portion allows the sailor to unweight or lift the front of the craft to effect sharp turns. This action may be compared to the unweighting of a skateboard to achieve the same results. The determination of the dimensions of the stern projection will also be within the skill of persons skilled in the art.

The action, operation and look of the sailcraft of the present invention is similar to conventional free sail sailcraft used on water. As in conventional sailboards, in the present invention the sail is mounted on a mast which is connected to the sailboard board to articulate about a joint. The boom for the sail surrounds the sail to be grasped from either side of the sail. The sail may be rotated about the joint connecting the mast to the sailboard to allow selection of the direction of incidence of the wind upon the sail. The present sailboard is fitted wth a mounting fixture adapted to receive most of the conventional universal joints commonly in use and which is adapted to be slid longitudinally along a portion of the board and fixed in position to permit adjustment for different performance as is conventionally done with free sail water craft.

The front and rear articulation of the mast of a free sail water craft allows steering by varying a turning moment created by the relative positions of the center of force of the wind on the sail and the center of force of the water resistance on the sailboard. When the mast is tilted forward, the board tends to turn out of the wind and when the mast is tilted backward, the board tends to turn into the wind. Similarly, on the sailboard of this invention the steering may be controlled in a similar manner, however, it is not fully understood how the center of force of the sailboard manifests itself. At high speed sailing on a short sailboard of a free sail water craft fore and aft tilting of the sail may become impractical because of the position of the sailor. Therefore, much of the steering is governed by weight shifts on the board seemingly with less sail manipulation. Similarly on the present invention at high speeds the steering is largely controlled by weights shifts by the sailor on the sailboard. The particular method employed by a sailor will be determined by his or her developed skills and the particular conditions at the time.

There are no steering controls connected to the board. It turns in response to the action of the operator. Also, on high speeds, the board may be rolled over sideways to get more speed and control. Less contact but more grip permits create higher speed. In lean position, the gap can be closed so well, allowing the minimum wind to escape. In 45°, the upper Side of the board touches the bottom side of the sail. The board itself, because of the angle, catches the wind and guides it into the sail. Therefore, it creates more thrust than in a flat position. When the gap is open and the wind escapes, there is less power and less speed. The nose of the board is designed in such a way that it allows and guides it through any kinds of bumps or deep snow. Between the nose runners and the back runners, the board is flexible like skies. So when going over bumps, it will not lift as much and the back end under the operator's weight stays level with the surfaces. So gripping is continuous. The runners of the nose and the runners of the back are on the same level of the surfaces. They are slightly lower than the main body, so when they are running on the ice, the bottom part of the board is not touching it. Therefore, they will not wear out. When you hit the snow, the bottom will take it over and the runners act like a gripper. The front runners are flat or rounded so they can easily slide in any direction. the back runners are very sharp and heat hardened steels giving excellent grip.

One of the major features of this invention is the narrow bottom and the wider upper deck which make it possible to turn the board sideways. In this position the running blades has a lot of grip on ice or snow. A lot more thrust or pressure could be made without glide the board sideways. Having the maximum forward thrust gives it extremely high speed. The back end of the board is designed such upward angle so when the operator steps on it and forces his/her weight on it, the nose will lift up in the air, and the board can be turned around or used like one of the breaking methods.

It is not possible to foresee all the possible maneuveurs that a sailor may execute while using this sailboard, for, as has been demonstrated by the use of skateboards and free sail water craft, the extent of what can be done seems to be limited only by the imagination of the sailors. The construction of the present invention, however, provides a solid, integral vehicle for the exercise of that imagination on snow and ice.

The sailboard of this invention is capable of reaching high speeds on ice and is capable of jumps and other high performance stunts that present a risk of injury to the sailor. Accordingly, the inventor warns that sailors should wear suitable protective clothing and helmets whenever operating this sailboard at high speeds.

In preferred embodiments of this invention a brake means is provided in the stern. The brake is a rod which fits in slideable connection through a hole in the stern and is biased upwardly by a spring. The top of the rod ends in a pedal which may be depressed by the sailor to push the rod onto the terrain surface to create drag to slow or stop the sailboard.

An embodiment of the present invention will hereinafter be described, by way of example, with reference to the accompanying drawings, in which:-
Figure 1 is a perspective view of a sailing device incorporating a sailboard of the invention,
Figure 2 is a side view of the sailing device of Figure 1,

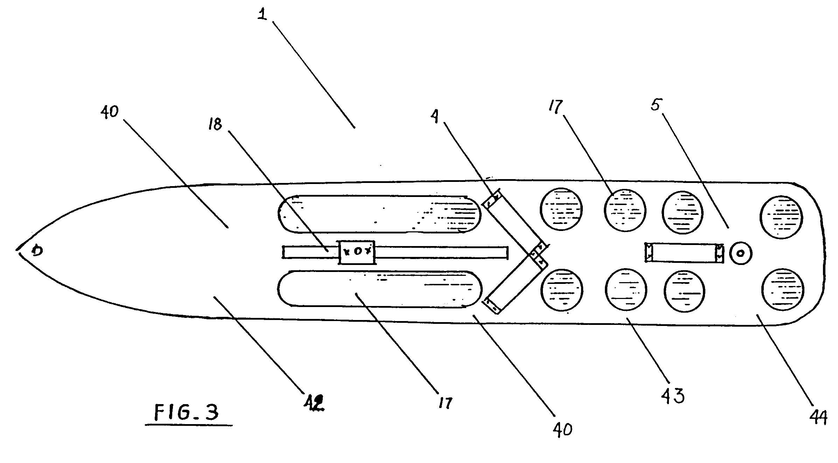

Figure 3 is plan view of the upper body or top side of a sailboard of the invention,

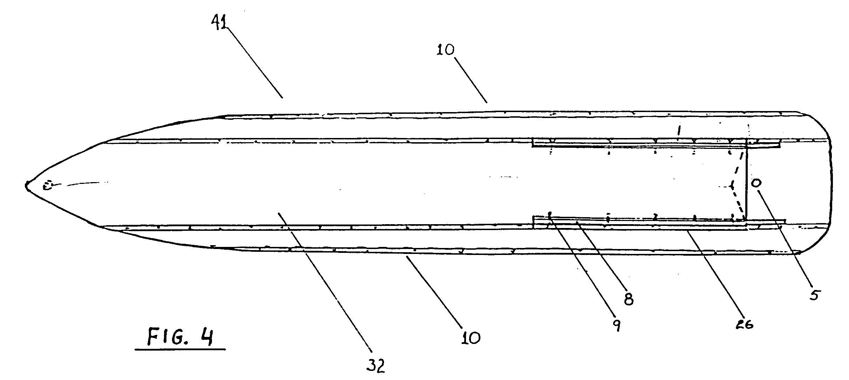

Figure 4 is bottom view of the underside of the sailboard of Figure 3,
Figure 5 shows a vertical cross-sectional view taken through a rear blade of the sailboard of Figures 3 and 4,
Figure 6 shows a detail of the rear blade of Figure 5,
Figure 7 illustrates a blade of the sailboard of Figures 3 and 4, and
Figure 8 is a side view of the stern and the braking means of the sailboard of Figures 3 and 4.

In the accompanying drawing;
(1) - generally indicates a sailboard,
(2) - indicates an articulated mast of a conventional free sail rigging,
(3) - indicates a conventional universal joint,
(4) - indicates conventional foot straps for a sailboard,
(5) - indicates a brake,
(6) - indicates a brake spring,
(8) - indicates a rear runner blade,
(9) - indicates side mounting screws for the runner blades,
(10) - indicates a side edge means along the laterally outermost part of the underside of the sailboard,
(11) - indicates the apogee of the channel means,
(12) - indicates the glide pads of the runners,
(13) - indicates the underside of the bow portion of the sailboard,
(15) - indicates a conventional sail of a free sail rigging,
(16) - indicates a conventional wishbone boom of a free sail rigging,
(17) - indicates rubber slip resistant pads,
(18) - indicates a conventional track in the top side for adjustment of the free sail rigging,
(26) - indicates a runner blade box,
(27) - indicates runner blade reinforcing supports,
(28) - indicates a runner blade adjustment screw,
(31) - indicates the channel in the underside,
(32) - indicates the surface of the underside,
(33) - indicates runner blade mounting slots,
(40) - indicates the top side,
(41) - indicates the underside,
(42) - indicates the bow portion,
(43) - indicates the platform portion,
(44) - indicates the stern portion,
(45) - indicates a runner.

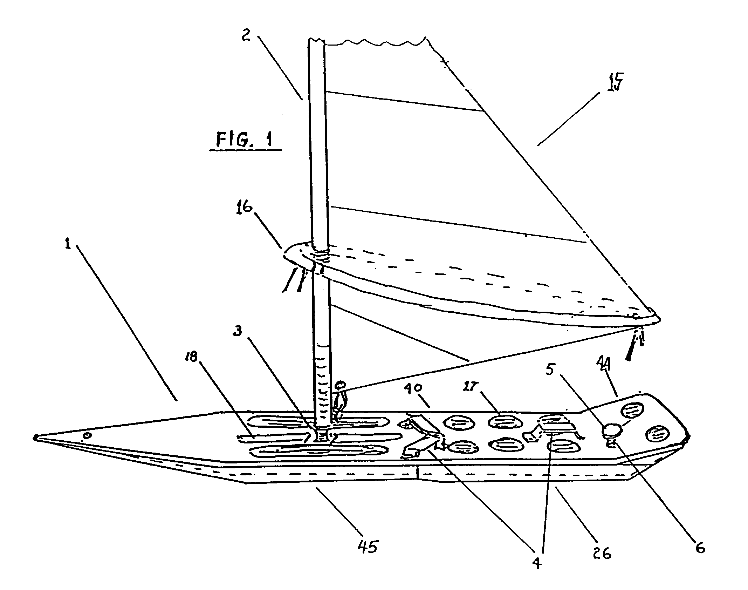

In Figure 1, a sailboard (1) of this invention is shown fitted with a conventional free sail rigging including a sail (15), a wishbone boom (16) and an articulated mast (2) mounted on the sailboard by a conventional universal joint (3). The joint (3) is fitted into a conventional track (18) in the top side of the sailboard to allow adjustment of the position of the free sail rigging in the manner known and used for free sail water craft. The top side (40) of the sailboard (1) has rubber slip resistant pads (17) on the deck of the sailboard. The sailboard (1) also has conventional foot straps (4) which help to avoid slipping and provide greater control of the sailboard (1) during high speed operation.

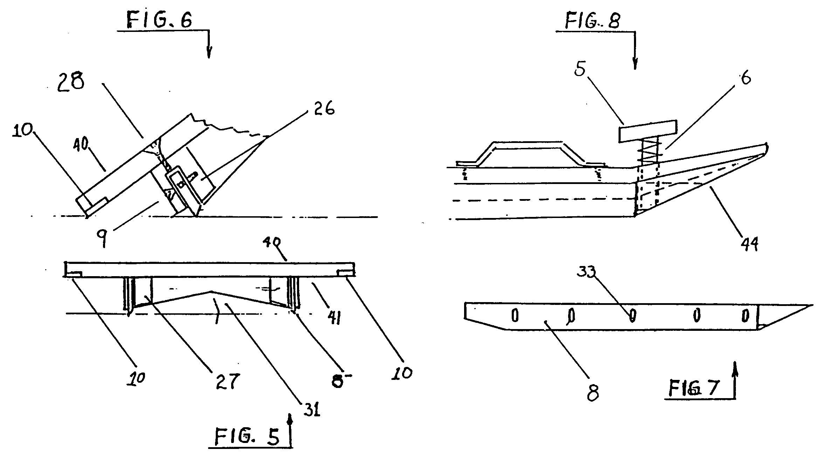

A brake (5) biased upwardly by a brake spring (6) [shown in more detail in Figure 8] is provided in the stern portion (44) of the sailboard. To operate the brake (5) a sailor would step on it to press it through the upturned underside of stern portion (44) down upon the surface of the terrain to frictionally resist movement. The brake may also serve as a pivot point for more dramatic stop and pivot manoeuvres.

The runner blades (8) are built into the rear portion of the runners under the rear part of platform portion (43) of the sailboard where the sailor's weight would be most concentrated. The blades (8) are mounted in the runners (44) with side mounting screws (9) which pierce a runner blade box (26) in the runners (45). The blades (8) have mounting slots (33) which receive the side mounting screws (9). The projection of the blades (8) outside the box (26) is adjustably set with blade adjustment screws (28) in the top side (40) which project through the runners (45) to the top of the blade (8). Adjustment of the height of a blade (8) will be obtained by turning the screws (28) to push the blade (8) lower. Other means to obtain the adjustment of the blade (8) may be employed. It is preferred that either the box (26) or the blades (8) be mounted to permit a small degree of fore and aft pitch so that if the front of the sailboard is raised by an irregularity in the surface the blades at the rear remain flat on the surface to prevent side slipping. There are many ways of achieving this pitching mobility in the blades, and the degree of mobility will be determined by performance considerations and the physical characteristics of a sailboard. Screws (28) may serve as a pivot point for example. One factor of significance to this determination will be the degree of flexibility to bending along the length of the board.

A side edge means (10) is preferably provided along the laterally outermost edge of the underside where it meets the top side of the sailboard to take the wear occasioned by the action of rolling the sailboard on its side during sailing. In one preferred embodiment the edge (10) is a sharpened metal ridge similar to the edge of a downhill ski. In this embodiment the edge may be ridden as a runner in sharp turns.

It is foreseen that some kind of blade reinforcing supports (27) may be required to secure the blade boxes (26) to the underside of the sailboard (1) against the forces created during turning. In the illustrated embodiment, supports are provided inwardly of the blade box (26) since the greatest force is usually that directed inward while riding on one blade while turning or tacking. Of course, there are other ways to adequately support the blades in the runners.

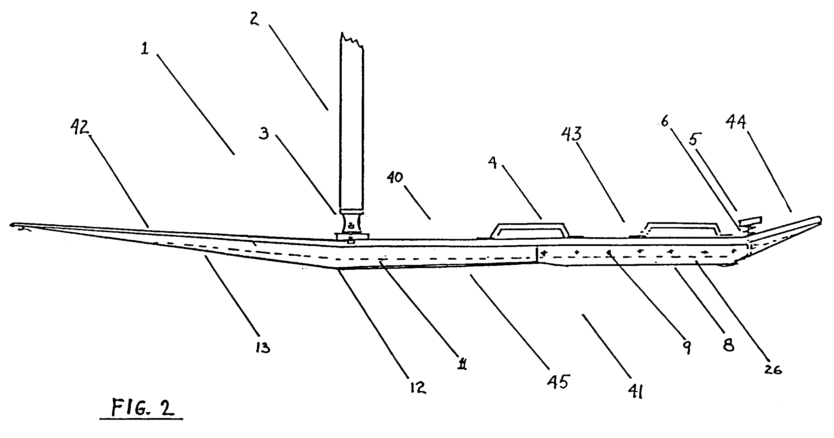

The sailboard (1) has a channel (31) along the longitudinal centre of the surface of the underside (41) which extends from the bow to the stern, although not necessarily from very front to the very back. The lateral ridges of channel (31) become the longitudinal runners (45) in the underside (31). In Figure 2 the apogee (11) of the channel (31) is shown as a dotted line.

It will be appreciated that the particular shape of the channel will be a matter of design for performance. No doubt many designs may be conceived of that employ concave or inverted "V" shapes or other shapes that will have particular performance characteristics for particular conditions. It is possible that a plurality of channels forming a plurality of runners may be employed. It is possible that only one runner centrally located could be used without a channel. It will be appreciated that the underside should have a slippery surface. Plastic, fibreglass, epoxy and even metal surfaces may be appropriate. The selection of materials is a matter within the skill of the art.

The shape of the runners should be such that there is little resistance to lateral slippage near the front of the sailboard while there is greater resistance at the rear. This facilitates turning. There should also be a sufficient length of the runner that resists lateral slippage so that the sailboard can tack.

The shape of the runners is dictated by the slope of the inner walls of the channel (31) and by the slope of the underside extending laterally from the runners to the top side. Generally, in snow or snow covered ice the steeper the slopes of the runner side walls the greater the resistance to lateral slippage. Therefore the shape of channel (31) may vary accordingly from the bow to the stern. On bare ice, sharp edges such as provided by blades (8) are required to prevent lateral slipping. It is also preferred that glide pads (12) of hardened surfaces (preferrably metal) be affixed to the runners on the rear part of underside of the bow portion (13) of the sailboard. The glide pads (12) are adapted to receive the wear and tear of forward motion or lateral turning and to present little frictional resistance to either.

### EXPLOITATION AND USE

The sailboard of this invention may be manufactured for sale to be used with conventional free sail rigs for sailing on ice and snow during the winter. There are many people who have the skill to operate free sail craft who are unable to practice their skill in the winter months because until now there has not been a sailboard that would permit them to do so. The present invention is surprising in its mobility and maneuveurability and provides at least as much excitment as the corresponding water sport. Therefore, it is seen that this invention may be exploited to create a new manufacture and a new sport.

## Claims

1. A sailboard (1) for sailing on snow or ice by way of a conventional articulated hand held sail means (2, 3, 15 and 16) mounted thereon, the sailboard having a top side (40) and an underside (41), a bow portion (42), a platform portion (43) and a stern portion (44), and wherein at least the underside of the bow portion (42) extends forwardly and upwardly such that the sailboard is enabled to ride over surface irregularities, and at least the underside of the stern portion (44) extends rearwardly and upwardly such that pressure over the stern portion is able to unweight the bow and platform portions (42, 43), and wherein the underside has two spaced longitudinal runners (45) located laterally inwardly of the most laterally outward part of the top side (40), extending to the bow portion (42) of the sailboard, and shaped to glide longitudinally but with low resistance to lateral slippage, characterised in that a part of each said runner (45) towards the rear of said platform portion is shaped to resist lateral slippage, in that each said runner extends downwardly from the underside (41) of the sailboard by an amount sufficient to enable the sailboard to be rolled over laterally onto one of the runners when manoeuvring, in that a projecting rear blade (8) extends along a part of each said runner (45) near the rear of the platform portion (43), and in that the underside (41) has a single channel (31) extending along a central longitudinal axis substantially along the full longitudinal extent thereof, said channel (31) being defined by the inner surfaces of said two longitudinal extending runners (45) and by said underside (41).

2. A sailboard as claimed in Claim 1, wherein a front glide pad (12) having low resistance to longitudinal or lateral slippage is located on each said runner (45) near the front of the platform portion.

3. A sailboard as claimed in Claim 1 or Claim 2, wherein a brake is mounted in said stern portion (44) and is movable downwardly under foot pressure to fictionally engage a surface beneath the sailboard, and further comprising bias means (6) arranged to bias the brake upwardly such that downward movement thereof is against the action of said bias means.

4. A sailboard as claimed in any preceding claim, wherein said rear blade (8) is mounted on the respective runner (45) so as to be pivotable fore and aft.

## Patentansprüche

1. Ein Surfbrett (1) zum surfen auf Schnee oder Eis auf welches ein konventionelles von Hand gehaltenes Segel montiert ist (2,3,15 und 16), Ein Surfbrett welches mit einer Oberseite (40) und einer Unterseite (41) einem vorderen Teil (42), einer Plattform (43) und einem hinteren Teil (44) ausgestattet ist, Ein Surfbrett bei welchem zumindest die Unterseite des vorderen Teils (42) nach vorn und aufwaerts verlaengert ist, so dass das Surfbrett ueber Unebenheiten fahren kann und bei welchem zumindest die Unterseite des hinteren Teils (44) nach hinten und aufwaerts verlaengert ist so dass Druck ueber dem hinteren Teil ermoeglicht den Bug und die Plattform (42,43) anzuheben, und bei dem die Unterseite zwei sich in einem Abstand befindende laengsgerichtete Laeufer (45) hat, die sich seitlich inwaerts des seitlichsten auesseren Teils der Oberseite (40) befinden, sich zum vorderen Teil des Surfbretts (42) verlaengern und so geformt sind, dass laengsgerichtetes Gleiten bei geringem seitlichem Rutschen moeglich ist,
Das Surfbrett ist dadurch gekennzeichnet, dass ein Teil jedes besagten Laeufers (45) zum hinteren Ende der besagten Plattform hin so geformt ist, dass seitliches Rutschen verhindert wird, dass jeder besagter Laeufer sich von der Unterseite (41) abwaerts verlaengert, in einem Ausmass, dass es ermoeglicht das Surfbrett beim manoevern seitlich, auf einen der Laeufer zu kippen, dass es eine Klinge (8) in der Naehe der hinteren Plattform entlang jeden besagten Laeufers (45) aufweist, dass die Unterseite (41) eine einzige Furche (31) aufweist, die sich entlang der mittleren Laengsachse erstreckt, im Wesentlichen der vollen Laenge entsprechend, dass besagte Furche (31) durch die innere Oberflaeche der besagten beiden in laengsrichtung verlaufenden Laeufer (45) und der besagten Unterseite (41) definiert wird.

2. Ein Surfbrett, wie in Anspruch 1 beschrieben, bei welchem ein vorderes Gleitkissen (12), dass geringen Widerstand bei Rutschen in laengs- oder seitlicher Richtung aufweist, sich auf jedem besagten Laeufer (45) in der Naehe des vorderen Endes der Plattform befindet.

3. Ein Surfbrett, wie in Anspruch 1 oder 2 beschrieben, bei welchem eine Bremse im besagten hinteren Teil (44) montiert und durch Fussdruck abwaerts bewegt werden kann um in die Oberflaeche unterhalb des Surfbretts einzugreifen und bei welchem die Bremsfeder (6) so ausgerichtet ist, dass die Bremse nach oben ausgerichtet ist, so dass die Abwaertsbewegung die besagte Bremsfeder zusammenpresst.

4. Ein Surfbrett wie in vorhergehenden Anspruechen beschrieben, bei dem die besagte hintere Klinge (8) auf den jeweiligen Laeufern (45) so montiert ist, dass es nach vorn und hinten gedreht werden kann.

## Revendications

1. Une planche à voile (1) pour glisser sur la neige ou la glace au moyen d'une voile articulée conventionnelle à main (2, 3, 15 et 16) montée dessus, la planche à voile ayant un dessus (40) et un dessous (41), une proue (42), un pont (43) et une poupe (44), et dont au moins le dessous de la proue (42) se prolonge vers l'avant et vers le haut de façon à ce que la planche à voile puisse naviguer sur les irrégularités de surface, et au moins le dessous de la poupe (44) se prolonge vers l'arrière et vers le haut de façon à ce qu'une pression sur la poupe permette d'alléger la proue et le pont (42, 43), et dont le dessous a deux patins espacés longitudinaux (45) situés latéralement à l'intérieur de la partie du dessus la plus latéralement vers l'extérieur (40), s'étendant vers la proue (42) de la planche à voile, et d'une forme permettant de glisser longitudinalement mais avec une faible résistance au dérapage latéral, caractérisés dans le fait qu'une partie de chaque patin mentionné (45) vers l'arrière du pont mentionné a une forme permettant de résister au dérapage latéral, du fait que chaque patin se prolonge vers le bas depuis le dessous (41) de la planche à voile d'une quantité suffisante pour permettre à la planche à voile d'être tournée latéralement sur un des patins lors de manoeuvres, du fait qu'une lame arrière saillante (8) s'étend le long d'une partie de chaque patin mentionné (45) près de l'arrière du pont (43), et du fait que le dessous (41) a une unique rainure (31) s'étendant le long d'un axe longitudinal central en grande partie le long de sa pleine étendue longitudinale, cette rainure (31) étant définie par les surfaces intérieures des deux patins (45) et par le dessous mentionné (41).

2. Une planche à voile telle que déclarée dans la déclaration 1, où un tampon de glissement avant (12) ayant une faible résistance au dérapage longitudinal ou latéral est situé sur chacun des patins mentionnés (45) près de l'avant du pont.

3. Une planche à voile telle que déclarée dans la déclaration 1 ou la déclaration 2, où un frein est monté sur la poupe mentionnée (44) et est mobile vers le bas sous une pression du pied pour fictivement engager une surface sous la planche à voile, et comprimant encore le ressort (6) arrangé pour repousser vers le haut le frein de façon à ce que son mouvement vers le bas aille à l'encontre de l'action du ressort mentionné.

4. Une planche à voile telle que déclarée dans toute déclaration précédente, où la lame arrière mentionnée (8) est montée sur le patin respectif (45) afin de pouvoir pivoter de l'avant à l'arrière.
